# EUROPÄISCHE PATENTSCHRIFT

(11) **EP 1 758 751 B1**
(45) Veröffentlichungstag und Bekanntmachung des Hinweises auf die Patenterteilung: **29.04.2015**
(21) Anmeldenummer: 05755541.9
(22) Anmeldetag: 01.06.2005
(51) Int. Cl.: B60J 7/14

(54) **CABRIOLET-FAHRZEUG**
CONVERTIBLE VEHICLE
VEHICULE DE TYPE CABRIOLET

(30) Priorität: 11.06.2004 DE 102004028467
(43) Veröffentlichungstag der Anmeldung: 07.03.2007
(73) Patentinhaber: Valmet Automotive Oy, 23500 Uusikaupunki (FI)
(72) Erfinder: MEINERT, Stefan, 49134 Wallenhorst (DE)
(74) Vertreter: Kronthaler, Schmidt & Coll.
(86) Internationale Anmeldenummer: PCT/DE2005/000989
(87) Internationale Veröffentlichungsnummer: WO 2005/120875

(56) Entgegenhaltungen:
- WO-A-03/091053
- WO-A-2004/037585
- DE-A1- 19 936 252
- US-A1- 2003 230 907

## Beschreibung

Die Erfindung betrifft ein Cabriolet-Fahrzeug mit einem rückwärtigen Dachteil, der einen eine Heckscheibe umfassenden und gegenüber Außenbereichen während der Dachbewegung verlagerbaren Mittelbereich umfaßt, nach dem Oberbegriff des Anspruchs 1.

Bei solchen Cabriolet-Fahrzeugen, bei denen in geöffneter Dachstellung der in geschlossener Stellung rückwärtige Dachteil zuunterst abgelegt ist, ist es zur Vergrößerung des unter dem abgelegten Dach verbleibenden Kofferraums wünschenswert, den rückwärtigen Dachteil so hoch wie möglich abzulegen. Dem sind jedoch Grenzen durch darüber abgelegte Dachteile gesetzt. Insbesondere wenn oberhalb des rückwärtigen Dachteils ein gegensinnig gewölbtes Dachteil liegt, haben die Längsrandbereiche der genannten Dachteile häufig Kontakt zueinander, so daß der zuunterst liegende rückwärtige Dachteil nicht höher abgelegt werden kann. Durch die gegensinnige Wölbung verbleibt allerdings im bezüglich der Fahrzeugquerrichtung mittleren Bereich Raum zwischen den genannten Dachteilen. Daher kann es sinnvoll sein, den rückwärtigen Dachteil zu teilen und während der Dachöffnung den Mittelbereich gegenüber den Außenbereichen zumindest teilweise aufwärts zu verlagern, so daß der Zwischenraum genutzt und der verbleibende Kofferraum vergrößert ist.

Die DE 199 36 252 C2 zeigt ein derartiges Cabriolet-Fahrzeug mit einer an den unteren Enden der Außenbereiche schwenkbeweglich angebundenen Heckscheibe, die über eine Hebelmechanik bei der Dachöffnung in ihrem oberen Bereich um das Schwenkgelenk der unteren Anbindung relativ aufwärts schwenkbar ist. Dabei hebt sich jedoch das obere Ende der Heckscheibe aus der Verbindung zu einem vorgeordneten Dachteil, so daß zur Abdichtung dieser Verbindung bei geschlossenem Dach separate Schließzapfen oder dergleichen Zentrierelemente vorgesehen sein müssen. Die Abdichtung zwischen den Dachteilen ist dadurch erschwert. Zudem ragt die Hebelmechanik in den Kopfbereich der Fahrzeuginsassen und bleibt dort auch bei zusätzlich vorgesehenen Verkleidungen störend. Des weiteren bezieht sich das Anheben der Heckscheibe nur auf das bei geöffnetem Dach hintere Ende, wohingegen das dann weiter vorne liegende Ende fest an die Außenbereiche angebunden bleibt, so daß dort der Kofferraum nicht vergrößert werden kann. Gleichzeitig ragt der Zentrierzapfen oder ein ähnliches Teil weit nach hinten in den Kofferraum, wodurch hier sogar Platz verloren geht.

Aus der US 2003/0230907 A1 ist ein Dach für ein Cabriolet-Fahrzeug offenbart, das ein vorderes Dachteil und ein hinteres Dachteil aufweist. Das hintere Dachteil weist eine Heckscheibe und seitliche Bereiche auf, wobei die Heckscheibe lediglich über einen zwei Lenker aufweisenden Mechanismus an den seitlichen Bereichen angebunden ist und bei einer Öffnungsbewegung des Daches gegenüber den seitlichen Bereichen aufwärts verlagerbar ist.

Zudem ist aus der WO 2004/037585 A ein Cabriolet-Fahrzeug mit einem Dach gezeigt, das ein hinteres Dachteil und ein sich in geschlossenem Dachzustand frontseitig daran anschließendes. vorderes Dachteil aufweist. Das hintere Dachteil ist geteilt ausgeführt und weist einen im geschlossen Dachzustand zwischen seitlichen Hauptsäulen liegenden, eine Heckscheibe aufweisenden Mittelbereich auf. Der Mittelbereich bildet zusammen mit den Hauptsäulen einen Gelenkmechanismus, über den das Dach zwischen der geschlossenen Position und der offenen Position verlagerbar ist.

Der Erfindung liegt die Aufgabe zugrunde, ein eingangs beschriebenes Cabriolet-Fahrzeug derart weiterzubilden, dass eine Abdichtung zwischen dem Mittelbereich des rückwärtigen Dachteils und dem vorgeordneten Dachteil bei einem Schließvorgang des Daches vereinfacht ausführbar ist.

Die Erfindung löst diese Aufgabe durch ein Cabriolet-Fahrzeug mit den Merkmalen des Anspruchs 1. Hinsichtlich weiterer vorteilhafter Ausgestaltungen der Erfindung wird auf die abhängigen Ansprüche 2 bis 11 verwiesen.

In der Ausbildung nach Anspruch 1 ist dadurch, daß der Mittelbereich mit seinem bei geschlossenem Dach oberen Ende an dem vorgeordneten Dachteil angelenkt ist, jederzeit die Verbindung zwischen den genannten Teilen gewährleistet, so daß beim Dachschließen kein Wiedereinfädeln stattfinden muß und somit eine Abdichtung zwischen den genannten Dachteilen einfach möglich bleibt. Es ragen keine Teile weit nach hinten in den Kofferraum vor, wodurch dieser bei abgelegtem Dach hinter diesem einen Raumgewinn aufweist. Gleichzeitig ist durch das Angreifen der die Relativverlagerung bewirkenden Bewegungseinrichtung im unteren Bereich des rückwärtigen Dachteils sowohl eine Einschränkung des Kopfraums der Insassen vermieden als auch erreicht, daß auch an diesem Ende der Mittelbereich gegenüber den Außenbereichen angehoben und somit der Kofferraum bei geöffnetem Dach über die gesamte Länge des hinteren Dachteils vergrößert sein kann.

Die Bewegungseinrichtung kann sowohl aktiv sein und beispielsweise einen Hydraulikzylinder oder anderen Antrieb umfassen als auch besonders vorteilhaft derart ausgebildet sein, daß sie während des Dachöffnens oder -schließens zwangsbewegt ist. Dann sind weitere Antriebs- oder Steuerungselemente entbehrlich.

Wenn der Mittelbereich den oberen Hebel eines Zweischlags ausbildet, dessen unterer Hebel an einem seitlichen Hebel der Dachbewegung oder dem Hauptlager mitbeweglich angebunden ist, ist eine besonders einfache Kinematik für die Relativbewegung des Mittelbereichs geschaffen, die eine verkantungsfreie und zwangsweise mit der Dachbewegung bestimmte Bewegung ermöglicht. Der untere Hebel ragt dabei nur wenig über die Fensterbrüstungslinie nach oben hinaus, so daß die Beeinträchtigung des Innenraums minimiert ist.

Insbesondere wenn der untere Hebel des Zweischlags im bei geschlossenem Dach unterem Drittel oder gar im unteren Viertel des Mittelbereichs schwenkbeweglich angreift, ist auch die Sicht nach hinten praktisch nicht beeinflußt.

Mit der Erfindung können, müssen jedoch nicht, der rückwärtige und der vorgeordnete Dachteil jeweils als zumindest im wesentlichen starre und bezüglich ihrer Außenflächen voneinander separate Baueinheiten ausgebildet sein, so daß die Erfindung insbesondere auch auf sog. Retractable Hardtops anwendbar ist.

Wenn vorteilhaft die Außenbereiche und der Mittelbereich des rückwärtigen Dachteils in jeder Phase der Dachbewegung mit dem vorgeordneten Dachteil schwenkbeweglich verbunden sind, ergibt sich zu keinem Zeitpunkt ein Problem bezüglich der Zentrierung der Teile zueinander. Die Abdichtung kann ohne erhöhten Aufwand ausgeführt sein.

Insbesondere bei Verwendung reiner Drehgelenke sowohl für die Anlenkung des unteren Hebels des Zweischlags als auch für die Verbindung des oberen und unteren Hebels des Zweischlags als auch für die Anbindung des oberen Hebels am vorgeordneten Dachteil ist die Relativbewegung in ihrem Ablauf optimiert und läuft flüssig eingebunden in die Gesamtdachbewegung.

Dabei ist es besonders hilfreich für die Ausübung einer Preßkraft auf die Abdichtung zwischen dem Mittelbereich und den Außenbereichen in geschlossener Dachstellung, wenn der untere Hebel des Zweischlags bei geschlossenem Dach im Nahbereich einer Totpunktstellung gehalten ist. Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, abgebrochene Seitenansicht eines erfindungsgemäßen Cabriolet-Fahrzeugs bei geschlossenem Dach,
- Fig. 2: das Dach nach Fig. 1 bei seiner beginnenden Öffnung,
- Fig. 3: eine ähnliche Ansicht wie Fig. 2 bei weiter fortschreitender Dachöffnung,
- Fig. 4: eine ähnliche Ansicht wie Fig. 3 bei weiter fortschreitender Dachöffnung,
- Fig. 5: eine ähnliche Ansicht wie Fig. 4 bei weiter fortschreitender Dachöffnung,
- Fig. 6: eine ähnliche Ansicht wie Fig. 5 bei weiter fortschreitender Dachöffnung,
- Fig. 7: eine ähnliche Ansicht wie Fig. 6 bei fast vollständig geöffnetem Dach,
- Fig. 8: eine ähnliche Ansicht wie Fig. 7 bei vollständig abgelegtem Dach.

Das erfindungsgemäße Cabriolet-Fahrzeug 1 kann sowohl ein mit einer Rückbank versehenes vieroder fünfsitziges Fahrzeug als auch, wie im gezeichneten Ausführungsbeispiel angedeutet, ein Zweisitzer sein.

Dabei kann das bewegliche und in geschlossener Stellung mittelbar oder unmittelbar an einen Windschutzscheibenrahmen 2 anschließende Dach 3, wie hier dargestellt, separate und mit zumindest jeweils einem starren Rahmen versehene Baueinheiten bildende Dachteile 4, 5 umfassen oder ein insgesamt mit einem gemeinsamen Bezug überzogenes Soft-Top bilden.

Das Dach 3 kann manuell oder voll- oder teilautomatisch zu bewegen sein.

Das bei geschlossenem Dach 3 bezüglich der Fahrtrichtung F rückwärtig liegende Dachteil 4 ist in jedem Fall in mehrere gegeneinander bewegliche Bereiche 6, 7 geteilt, wobei die Außenbereiche 6 hier sog. C-Säulen umfassen und ein bezüglich der Fahrzeugquerrichtung mittlerer Bereich 7 eine Heckscheibe 8 umfaßt. Der Mittelbereich 7 kann für eine gute Sicht nach hinten neben Anbindungsteilen im wesentlichen vollständig von der Heckscheibe 8 eingenommen sein. Die Trennfugen zwischen den Außenbereichen 6 und dem Mittelbereich 7 können in einer parallel zur Fahrtrichtung F liegenden vertikalen Ebene oder schräg zu dieser verlaufen.

Während der Dachöffnung ist der Mittelbereich 7 in einer unten näher erläuterten Bewegung gegenüber den Außenbereichen 6 aufwärts verlagerbar.

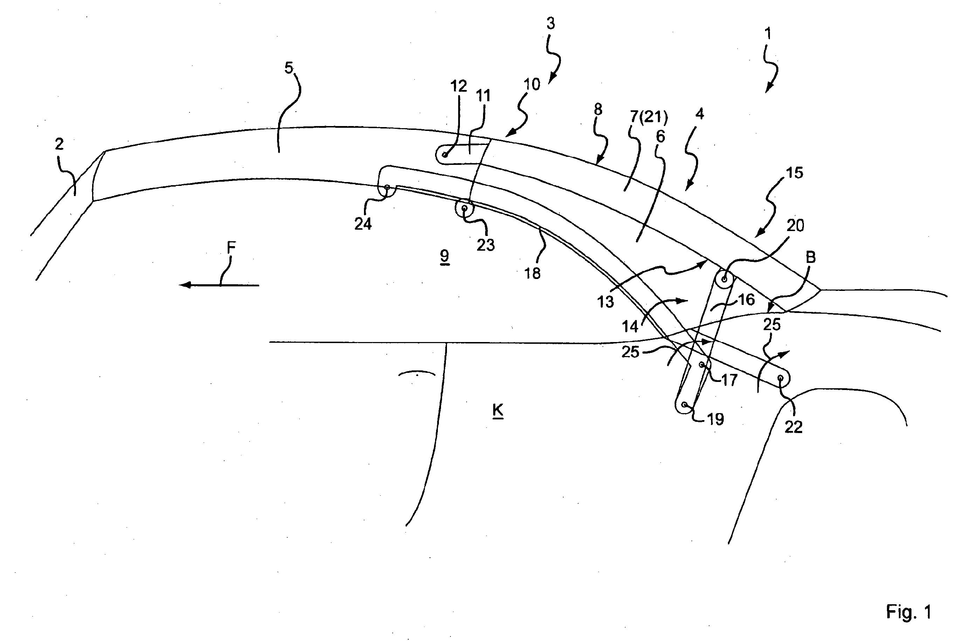

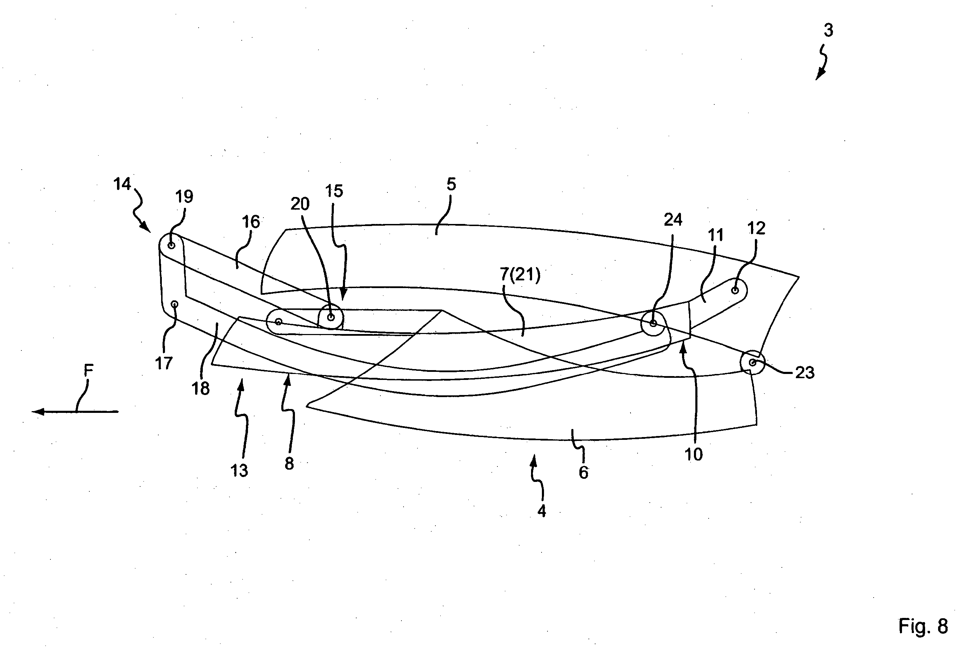

Dem rückwärtigen Dachteil 4 ist bei geschlossenem Dach (Fig. 1) in Fahrtrichtung F zumindest ein weiterer Dachteil 5 vorgeordnet, der hier im wesentlichen horizontal über einem Insassenraum 9 liegt und bei geöffnetem Dach 3 oberhalb des rückwärtigen Dachteils 4 gelegen ist (Fig. 8). Weitere nach vorne anschließende Dachteile (nicht gezeichnet) sind möglich.

Der Mittelbereich 7 ist mit seinem bei geschlossenem Dach 3 oberen Ende 10 an dem vorgeordneten Dachteil 5 über einen Ausleger 11 an einem Gelenk 12 angelenkt und in seinem unteren Bereich 13 an einer während der Dachöffnung diesen Bereich relativ zu den Außenbereichen 6 aufwärts verlagernden Bewegungseinrichtung 14 angebunden. Eine weitere Karosserieanbindung des Mittelbereichs 7 in seinem unteren Bereich 13 ist nicht erforderlich.

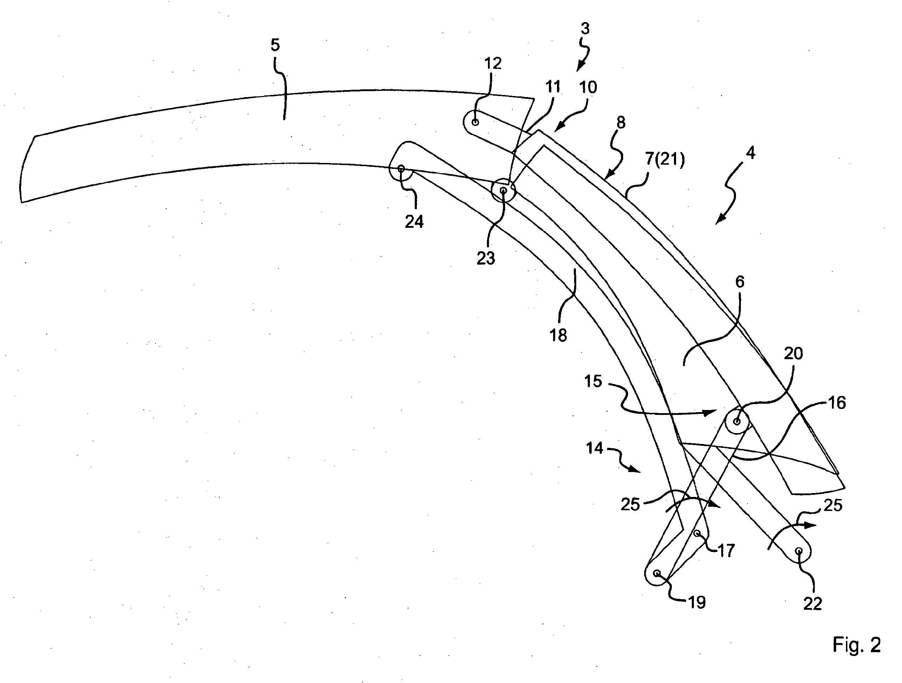

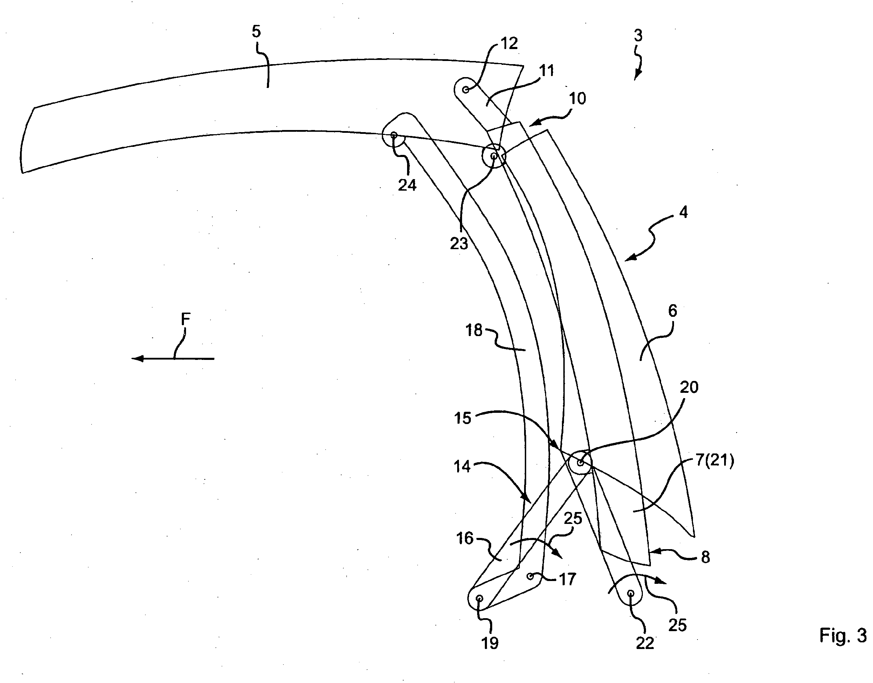

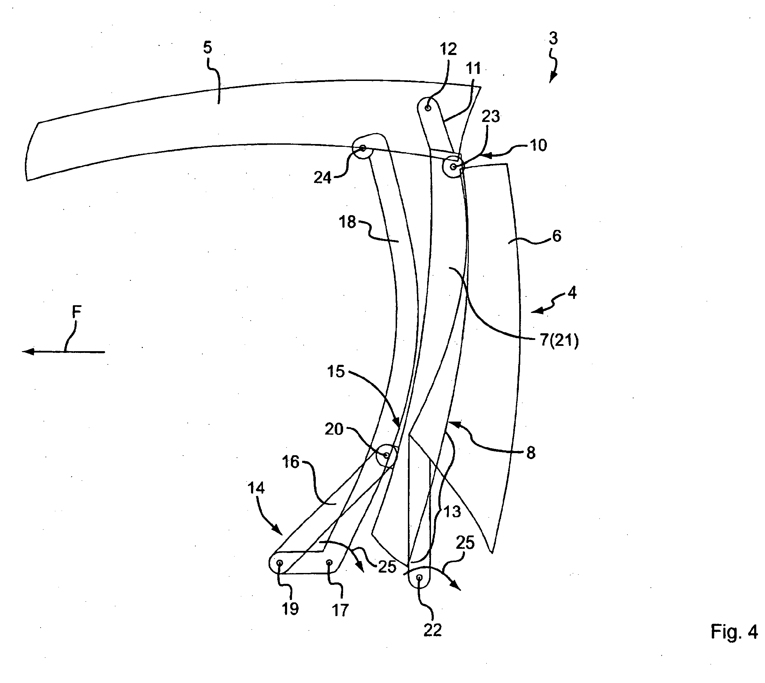

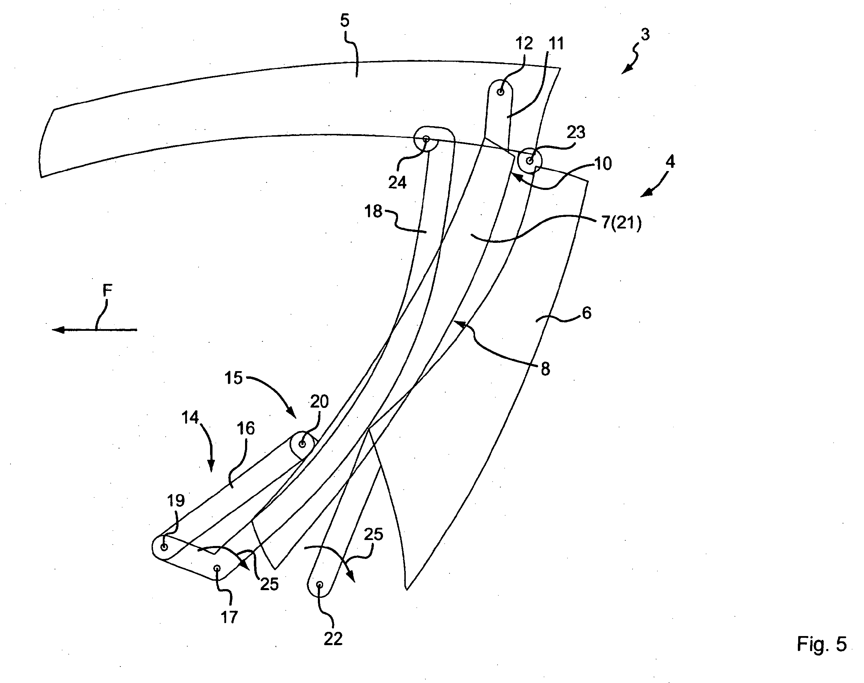

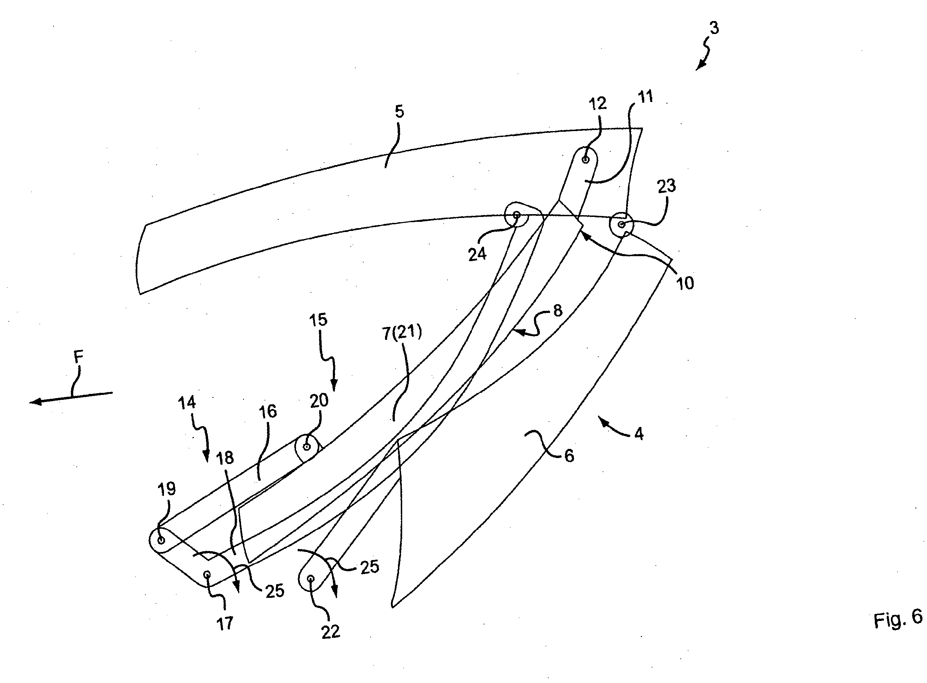

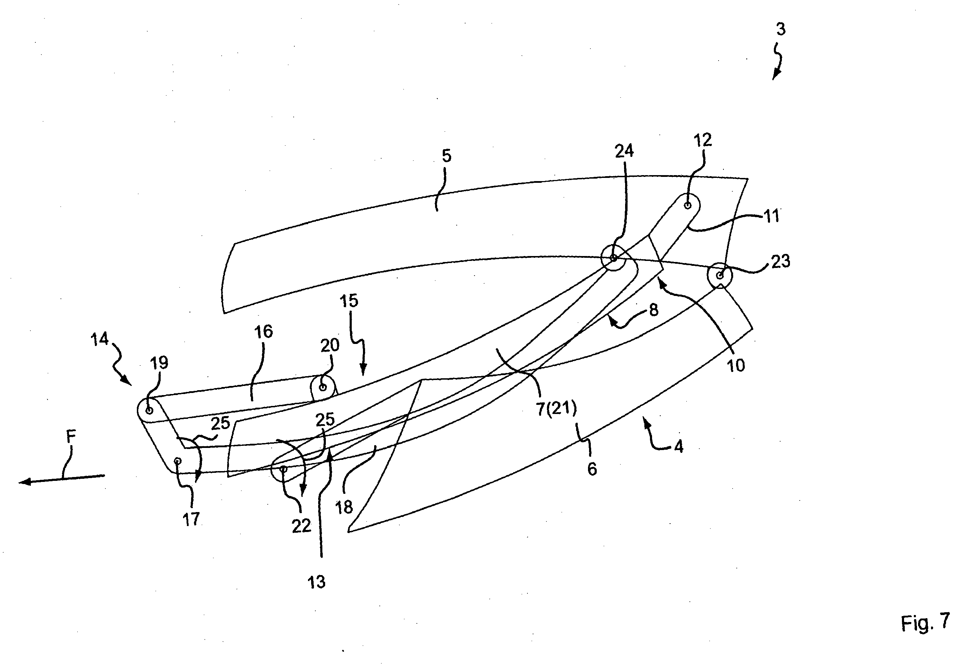

Dabei umfaßt, wie während der Dachöffnungsbewegung (Fig. 1 bis Fig. 8) in Seitenansicht deutlich wird, im Ausführungsbeispiel die Bewegungseinrichtung 14 den unteren Hebel 16 eines sog. Zweischlags 15.

Hierfür ist der untere Hebel 16 mittelbar an einem seitlichen Hauptlager der Dachbewegung mitbeweglich angebunden. Im Ausführungsbeispiel ist der Hebel 16 an einer den vorgeordneten Dachteil 5 an der Karosserie K schwenkbeweglich im Gelenk 17 abstützenden Führungsstange 18 über ein mit diesem mitbewegtes Gelenk 19 schwenkbeweglich gehalten. Die Führungsstange greift über das Gelenk 24 an dem vorgeordneten Dachteil 5 an.

Der Zweischlag 15 umfaßt neben dem an einer oder beiden Fahrzeugseiten angeordneten unteren Hebel 16 einen oberen, an einem Gelenk 20 gegen den unteren Hebel 16 schwenkbaren Hebel 21. Dieser ist durch den Mittelbereich 7 gebildet und daher am Gelenk 12 mit dem vorgeordneten Dachteil 5 verbunden.

Der untere Hebel 16 des Zweischlags 15 greift bei geschlossenem Dach 3 (Fig. 1) am Mittelbereich 7 sehr weit unten, insbesondere in seinem unteren Drittel oder noch besser unteren Viertel, über das Gelenk 20 an. Dadurch überragt der Hebel 16 nur geringfügig eine seitliche Fensterbrüstungslinie B der Karosserie K und stört den Insassenraum 9 praktisch nicht.

Im Ausführungsbeispiel sind die Anlenkung 19 des unteren Hebels 16 des Zweischlags 15, die Schwenkverbindung 20 des oberen 21 und unteren Hebels 16 des Zweischlags 15 und die Anbindung 12 des oberen Hebels 21 am vorgeordneten Dachteil 5 als reine Schwenkgelenke mit jeweils einem Rotationsfreiheitsgrad ausgebildet.

Die Außenbereiche 6 sind über ihre gesamte Längserstreckung in sich starr ausgebildet und am unteren Ende mit der Karosserie K über ein an einem Ausleger befindliches Schwenkgelenk 22 sowie am oberen Ende über ein weiteres Schwenkgelenk 23 mit dem vorgeordneten Dachteil 5 verbunden. Die Außenbereiche 6 bilden daher sog. Hauptführungsstangen aus, die zusammen mit den Führungsstangen 18 ein Parallelogramm oder zumindest über die unteren Anlenkungen 22, 17 und die oberen Anlenkungen 23, 24 ein Viergelenk ausbilden.

Ebenso ist auch der Mittelbereich 7 über sein Gelenk 12 während jeder Phase der Dachbewegung mit dem vorgeordneten Dachteil 5 verbunden. Dadurch entfällt das Erfordernis einer Zentrierung der Teile 4, 5 gegeneinander beim Schließen des Daches.

Zudem ist durch die Schwenkanbindung des Mittelbereichs 7 über den Ausleger 11 sichergestellt, daß der Mittelbereich 7 in abgelegter Dachstellung (Fig. 8) mit seinem oberen Ende 10 weiter in Fahrtrichtung F gelegen ist als das rückwärtige Ende des vorgeordneten Dachteils 5. Hierdurch wird nicht nur unterhalb des abgelegten Daches, sondern auch hinter diesem ein zusätzlicher Raumgewinn bewirkt.

Zur Öffnung des Daches (Ablauf nach Figur 1 bis Figur 8) wird über einen nicht dargestellten Antrieb eine Schwenkbewegung der Hauptführungsstange 6 um das Gelenk 22 und/oder der Führungsstange 18 um das Gelenk 17 in Richtung des Pfeils 25 bewirkt. Eine gegebenenfalls nicht angetriebene (Haupt-)Führungsstange 6, 18 wird wegen der Kopplung über den Dachteil 5 dabei mit verschwenkt.

Dadurch, daß die Bewegungseinrichtung 14 an die Führungsstange 18 angebunden ist, wird sie mit ihrem Hebel 16 während des Dachöffnens oder - schließens zwangsweise mitbewegt, ohne daß es hierfür eines eigenen Antriebs oder einer eigenen Steuerung bedarf. Somit wird auch die Verlagerung der Heckscheibe 8 gegenüber den Außenbereichen 6 zwangsweise mit der Dachbewegung bewirkt. Alternativ wäre auch mit zusätzlichem Aufwand möglich, als Bewegungseinrichtung 14 etwa einen Hydraulikzylinder vorzusehen, der einenends an der Karosserie K angebunden und anderenends mit dem Mittelbereich 7 verbunden sein könnte.

Durch die Schwenkanbindung des Mittelbereichs 7 über den Ausleger 11 am vorgeordneten Dachteil 5 ist neben der oben erwähnten Vorwärtsverlagerung weiter sichergestellt, daß das bei geschlossenem Dach obere Ende 10 des Mittelbereichs 7 während der Öffnungsbewegung relativ zu den Außenbereichen 6 angehoben wird.

Anders als im Stand der Technik wird aber auch der bei geschlossenem Dach untere Bereich 13 bei der Dachöffnung durch den Zweischlag 15 angehoben, was zur Folge hat, daß der Mittelbereich 7 gegenüber den Außenbereichen 6 bei geöffnetem Dach über seine ganze Längserstreckung angehoben ist (Fig. 8) und somit der Kofferraum gegenüber einem reinen Aufwärtsschwenken des oberen Endes 10 des Mittelbereichs 7 deutlich vergrößert ist.

Dadurch, daß der Mittelbereich 7 über seine ganze Länge in der gleichen Richtung aus der Dichtung zu den Außenbereichen 6 herausgehoben wird, können durchgehende Dichtprofile ohne Abstufungen verwendet werden, was die Herstellung und Abdichtung vereinfacht. Da der untere Hebel 16 des Zweischlags 15 bei geschlossenem Dach (Fig. 1) im Nahbereich einer Totpunktstellung gehalten ist, ist zusätzlich in dieser Stellung eine vorteilhafte erhebliche Preßkraft auf die Dichtlinie erreicht.

Schließlich ermöglicht die Erfindung auch noch das Vorsehen eines Schiebedachs (nicht gezeichnet) im vorgeordneten Dachteil 5, das über den Mittelbereich 7 verlagerbar und mit diesem zu öffnen sein kann.

## Patentansprüche

1. Cabriolet-Fahrzeug (1) mit einem beweglichen Dach (3), dessen bezüglich der Fahrtrichtung (F) bei geschlossenem Dach rückwärtiger Dachteil (4) geteilt ist in einen eine Heckscheibe (8) umfassenden Mittelbereich (7) und seitliche Außenbereiche (6), wobei die Außenbereiche (6) über ihre gesamte Längserstreckung in sich starr ausgebildet sind und an einem unteren Ende mit einer Karosserie (K) über ein an einem Ausleger befindliches Schwenkgelenk (22) sowie an einem oberen Ende über ein weiteres Schwenkgelenk (23) mit einem in geschlossener Dachposition vorgeordneten Dachteil (5) verbunden sind, und wobei die Außenbereich (6) so genannte Hauptführungsstangen ausbilden, die zusammen mit Führungsstangen (18) ein Parallelogramm oder zumindest über untere Anlenkungen (17, 22) und obere Anlenkungen (23, 24) ein Viergelenk bilden, wobei der Mittelbereich (7) während der Dachöffnung gegenüber den Außenbereichen (6) bereichsweise aufwärts verlagerbar ist und in seinem unteren Bereich (13) an einer während der Dachöffnung diesen Bereich relativ zu den Außenbereichen (6) aufwärts verlagernden Bewegungseinrichtung (14) angebunden ist,
**dadurch gekennzeichnet,**
**daß** der Mittelbereich (7) mit seinem bei geschlossenem Dach (3) oberen Ende (10) an einem vorgeordneten Dachteil (5), das bei geschlossenem Dach (3) dem rückwärtigen Dachteil (4) in Fahrtrichtung (F) vorgeordnet und bei geöffnetem Dach (3) zumindest teilweise oberhalb des rückwärtigen Dachteils (4) gelegen ist, angelenkt ist.

2. Cabriolet-Fahrzeug (1) nach Anspruch 1
**dadurch gekennzeichnet,**
**daß** die Bewegungseinrichtung (14) während des Dachöffnens oder -schließens zwangsbewegt ist.

3. Cabriolet-Fahrzeug (1) nach einem der Ansprüche 1 oder 2,
**dadurch gekennzeichnet,**
**daß** der Mittelbereich (7) den oberen Hebel (21) eines Zweischlags (15) ausbildet, dessen unterer Hebel (16) an einem seitlichen Hebel der Dachbewegung oder dem Hauptlager mitbeweglich angebunden ist.

4. Cabriolet-Fahrzeug (1) nach Anspruch 3,
**dadurch gekennzeichnet,**
**daß** der obere Hebel (21) des Zweischlags (15) an einem in geschlossener Dachstellung dem hinteren Dachteil (4) in Fahrtrichtung (F) vorgeordneten Dachteil (5) schwenkbeweglich angebunden ist.

5. Cabriolet-Fahrzeug (1) nach einem der Ansprüche 3 oder 4,
**dadurch gekennzeichnet,**
**daß** der untere Hebel (16) des Zweischlags (15) an einer den vorgeordneten Dachteil (5) an der Karosserie (K) schwenkbeweglich abstützenden Führungsstange (18) schwenkbeweglich (Gelenk 19) gehalten ist.

6. Cabriolet-Fahrzeug (1) nach einem der Ansprüche 3 bis 5,
**dadurch gekennzeichnet,**
**daß** der untere Hebel (16) des Zweischlags (15) im bei geschlossenem Dach (3) unterem Drittel des Mittelbereichs (7) schwenkbeweglich (Gelenk 20) angreift.

7. Cabriolet-Fahrzeug (1) nach einem der Ansprüche 1 bis 6,
**dadurch gekennzeichnet,**
**daß** der rückwärtige (4) und der vorgeordnete Dachteil (5) jeweils als zumindest im wesentlichen starre und bezüglich ihrer Außenflächen voneinander separate Baueinheiten ausgebildet sind.

8. Cabriolet-Fahrzeug (1) nach einem der Ansprüche 1 bis 7,
**dadurch gekennzeichnet,**
**daß** sowohl die Außenbereiche (6) als auch der Mittelbereich (7) des rückwärtigen Dachteils (4) während jeder Phase der Dachbewegung mit dem vorgeordneten Dachteil (5) schwenkbeweglich verbunden sind.

9. Cabriolet-Fahrzeug nach einem der Ansprüche 1 bis 8,
**dadurch gekennzeichnet,**
**daß** der Mittelbereich (7) gegenüber den Außenbereichen (6) bei geöffnetem Dach (3) über seine ganze Längserstreckung angehoben ist.

10. Cabriolet-Fahrzeug (1) nach einem der Ansprüche 3 bis 9,
**dadurch gekennzeichnet,**
**daß** sowohl die Anlenkung (19) des unteren Hebels (16) des Zweischlags (15) als auch die Verbindung (20) des oberen (21) und unteren Hebels (16) des Zweischlags (15) als auch die Anbindung (12) des oberen Hebels (21) am vorgeordneten Dachteil (5) als Schwenkgelenke mit jeweils einem Rotationsfreiheitsgrad ausgebildet sind.

11. Cabriolet-Fahrzeug (1) nach einem der Ansprüche 3 bis 10,
**dadurch gekennzeichnet,**
**daß** der untere Hebel (16) des Zweischlags (15) bei geschlossenem Dach (3) im Nahbereich einer Totpunktstellung gehalten ist.

## Claims

1. A convertible vehicle (1) comprising a movable roof (3) whose part (4) at the rear with respect to the direction of travel (F) when the roof is closed is divided into a middle region (7) comprising a rear window (8) and into lateral outer regions (6), said outer regions (6) being inherently rigid over their entire longitudinal extent and having a lower end connected to a vehicle body (K) via a pivot joint (22) disposed on an outrigger as well as an upper end connected, via another pivot joint (23), to a roof part (5) located at the front when the roof is closed, and said outer regions (6) forming so-called main guide rods which, together with guide rods (18), form a parallelogram or at least form a four-bar linkage via lower articulations (17, 22) and upper articulations (23, 24), with the middle region (7) being upwardly displaceable in part with respect to the outer regions (6) during the opening of the roof and having its lower region (13) connected to a movement device (14) displacing this region upwardly relative to the outer regions (6) during the opening of the roof, **characterised in that** the end (10) of the middle region (7) at the top when the roof (3) is closed is connected to a roof part (5), which is arranged at the front and is arranged in front of the rear roof part (4) in the direction of travel (F) when the roof (3) is closed and is disposed at least partly above the rear roof part (4) when the roof (3) is open.

2. The convertible vehicle (1) according to claim 1, **characterised in that** the movement device (14) is moved along in a compulsory manner during the opening or closing of the roof.

3. The convertible vehicle (1) according to any one of claims 1 or 2, **characterised in that** the middle region (7) forms the upper lever (21) of a two-bar linkage (15) whose lower lever (16) is co-movably connected to a lateral lever of the roof movement or to the main bearing.

4. The convertible vehicle (1) according to claim 3, **characterised in that** the upper lever (21) of the two-bar linkage (15) is connected in a pivotally movable manner to a roof part (5) arranged in front of the rear roof part (4) in the direction of travel (F) when the roof is closed.

5. The convertible vehicle (1) according to any one of claims 3 or 4, **characterised in that** the lower lever (16) of the two-bar linkage (15) is held in a pivotally movable manner (joint 19) at a guide rod (18) supporting the roof part (5) arranged at the front at the vehicle body (K) in a pivotally movable manner.

6. The convertible vehicle (1) according to any one of claims 3 to 5, **characterised in that** the lower lever (16) of the two-bar linkage (15) engages, in a pivotally movable manner (joint 20), in the third of the middle region (7) at the bottom when the roof (3) is closed.

7. The convertible vehicle (1) according to any one of claims 1 to 6, **characterised in that** the rear roof part (4) and the roof part (5) arranged at the front are each provided as at least substantially rigid construction units which are separate from one another with respect to their outer surfaces.

8. The convertible vehicle (1) according to any one of claims 1 to 7, **characterised in that** both the outer regions (6) and the middle region (7) of the rear roof part (4) are connected in a pivotally movable manner, during every phase of the roof movement, to the roof part (5) arranged at the front.

9. The convertible vehicle according to any one of claims 1 to 8, **characterised in that** the middle region (7) is raised over its entire longitudinal extent with respect to the outer regions (6) when the roof (3) is open.

10. The convertible vehicle (1) according to any one of claims 3 to 9, **characterised in that** both the articulation (19) of the lower lever (16) of the two-bar linkage (15) and the connection (20) of the upper lever (21) and lower lever (16) of the two-bar linkage (15) as well as the connection (12) of the upper lever (21) to the roof part (5) arranged at the front are provided as pivot joints each having a degree of rotational freedom.

11. The convertible vehicle (1) according to any one of claims 3 to 10, **characterised in that** the lower lever (16) of the two-bar linkage (15) is held in near proximity to a dead centre position when the roof (3) is closed.

## Revendications

1. Véhicule cabriolet (1), comportant un toit déplaçable (3) dont la partie (4) arrière par rapport à la direction de marche (F) lorsque le toit est fermé est divisée en une région centrale (7) comportant une lunette arrière (8) et en plusieurs régions extérieures latérales (6), lesdites régions extérieures (6) étant rigides en soi sur toute leur extension longitudinale et dont une extrémité inférieure est reliée avec une carrosserie (K) par une articulation pivotante (22) disposée sur un cantilever et une extrémité supérieure est reliée par une autre articulation pivotante (23) avec une partie de toit (5) disposée en avant lorsque le toit est fermé, et lesdites régions extérieures (6) constituant des barres de guidage dites principales qui constituent ensemble avec des barres de guidage (18) un parallélogramme ou constituent au moins un ensemble à quatre articulations au moyen d'articulations inférieures (17, 22) et d'articulations supérieures (23, 24), la région centrale (7) étant partiellement déplaçable vers le haut par rapport aux régions extérieures (6) pendant l'ouverture du toit et la région inférieure (13) de la région centrale (7) étant reliée avec un dispositif de déplacement (14) déplaçant ladite région inférieure (13) vers le haut par rapport aux régions extérieures (6) pendant l'ouverture du toit, **caractérisé en ce que** l'extrémité (10) de la région centrale (7) constituant l'extrémité supérieure de cette dernière lors de la fermeture du toit (3) est articulée sur une partie de toit (5) avant, qui est disposée en avant de la partie de toit arrière (4) en direction de marche (F) lors de la fermeture du toit (3) et est située au moins partiellement au-dessus de la partie de toit arrière (4) lorsque le toit (3) est ouvert.

2. Véhicule cabriolet (1) selon la revendication 1, **caractérisé en ce que** le dispositif de déplacement (14) est soumis à un déplacement forcé pendant l'ouverture ou la fermeture du toit.

3. Véhicule cabriolet (1) selon l'une quelconque des revendications 1 ou 2, **caractérisé en ce que** la région centrale (7) constitue le levier supérieur (21) d'un mécanisme à deux leviers (15) dont le levier inférieur (16) est relié avec un levier latéral du mouvement de toit ou au palier principal de manière à être déplaçable en même temps.

4. Véhicule cabriolet (1) selon la revendication 3, **caractérisé en ce que** le levier supérieur (21) du mécanisme à deux leviers (15) est relié à pivotement avec une partie de toit (5) disposée en avant de la partie de toit arrière (4) en direction de marche (F) lorsque le toit est fermé.

5. Véhicule cabriolet (1) selon l'une quelconque des revendications 3 ou 4, **caractérisé en ce que** le levier inférieur (16) du mécanisme à deux leviers (15) est tenu à pivotement (articulation 19) sur une barre de guidage (18) supportant à pivotement sur la carrosserie (K) la partie de toit (5) disposée en avant.

6. Véhicule cabriolet (1) selon l'une quelconque des revendications 3 à 5, **caractérisé en ce que** le levier inférieur (16) du mécanisme à deux leviers (15) vient en prise à pivotement (articulation 20) dans le tiers inférieur de la région centrale (7) lorsque le toit (3) est fermé.

7. Véhicule cabriolet (1) selon l'une quelconque des revendications 1 à 6, **caractérisé en ce que** la partie de toit arrière (4) et la partie de toit (5) disposée en avant sont chacune réalisées sous forme d'unités de construction au moins sensiblement rigides, séparées l'une de l'autre par rapport à leurs faces extérieures.

8. Véhicule cabriolet (1) selon l'une quelconque des revendications 1 à 7, **caractérisé en ce que** les régions extérieures (6) et la région centrale (7) de la partie de toit arrière (4) sont toutes reliées à pivotement, pendant chaque phase de déplacement du toit, avec la partie de toit (5) disposée en avant.

9. Véhicule cabriolet selon l'une quelconque des revendications 1 à 8, **caractérisé en ce que** la région centrale (7) est levée sur toute son extension longitudinale par rapport aux régions extérieures (6) lorsque le toit (3) est ouvert.

10. Véhicule cabriolet (1) selon l'une quelconque des revendications 3 à 9, **caractérisé en ce que** l'articulation (19) du levier inférieur (16) du mécanisme à deux leviers (15) et la liaison (20) du levier supérieur (21) et du levier inférieur (16) du mécanisme à deux leviers (15) ainsi que la liaison (12) du levier supérieur (21) avec la partie de toit (5) disposée en avant sont toutes réalisées sous forme d'articulations pivotantes, chacune présentant un seul degré de liberté en rotation.

11. Véhicule cabriolet (1) selon l'une quelconque des revendications 3 à 10, **caractérisé en ce que** le levier inférieur (16) du mécanisme à deux leviers (15) est tenu à proximité d'une position de point mort lorsque le toit (3) est fermé.
